# EUROPEAN PATENT APPLICATION

(11) **EP 4 679 613 A1**
(43) Date of publication of application: **14.01.2026**
(21) Application number: 24835534.9
(22) Date of filing: 17.07.2024
(51) Int. Cl.: H01M 50/528, H01M 10/42, B23K 37/04, B23K 20/10, B23K 101/38

(54) **ELECTRODE TAB BONDING EQUIPMENT AND ELECTRODE TAB BONDING METHOD**

(30) Priority: 04.07.2023 KR 20230086548
(71) Applicant: LG Energy Solution, Ltd., Seoul 07335 (KR)
(72) Inventor: SEON, Sang Ok, Daejeon 34122 (KR); JUNG, Sang Eun, Daejeon 34122 (KR)
(74) Representative: Plasseraud IP
(86) International application number: PCT/IB2024/056908
(87) International publication number: WO 2025/008800

(57) **Abstract**

An electrode tab bonding equipment according to an embodiment of the present disclosure includes: a transfer member that transfers an electrode including an electrode current collector; a tab clamp jig that moves an electrode tab on one surface of the electrode current collector or pulls the electrode tab; a tensile force measuring device provided in the tab clamp jig; a bonding member that bonds the electrode tab on the electrode current collector; and at least one electrode clamp jig that fixes the electrode.

## Description

### [TECHNICAL FIELD]

The present disclosure relates to an electrode tab bonding equipment and an electrode tab bonding method, and more particularly, to an electrode tab bonding equipment having a means capable of inspecting the bonding degree of an electrode tab, and an electrode tab bonding method using the same.

### [BACKGROUND]

Recently, as the price of energy sources increases due to depletion of fossil fuels and the interest in environmental pollution increases, the demand for environmentally friendly alternative energy sources becomes an indispensable factor for future life. Therefore, research into various power generation technologies such as a nuclear power generation technology, a photovoltaic power generation technology, a wind power generation technology, a tidal power generation technology, and the like, has been continuously conducted, and a power storage device for efficiently using energy thus produced has also been interested.

Moreover, as the development of a technology and the demand for a mobile device have increased, the demand for a battery as an energy source has rapidly increased, and thus, various research into batteries capable of satisfying various requirements has been conducted. Particularly, in terms of materials, the demand for lithium secondary batteries, such as lithium ion batteries and lithium ion polymer batteries, having advantages such as high energy density, discharge voltage and power stability is very high.

A secondary battery includes an electrode assembly having a structure in which a positive electrode, a negative electrode, and a separator interposed between the positive electrode and the negative electrode are stacked. Such an electrode assembly is housed in a pouch-shaped case, a cylindrical can, a prismatic case, or the like in accordance with the purpose of use, thereby manufacturing a battery.

An electrode, which is a positive electrode or a negative electrode, is manufactured by applying an electrode active material slurry to an electrode current collector made of aluminum foil or copper foil. The electrode tab can be bonded to the portion of the electrode collector that is not applied with the electrode active material slurry, without applying the electrode active material slurry to a partial area of the electrode collector.

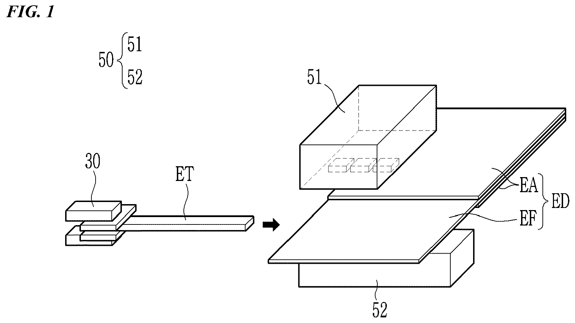

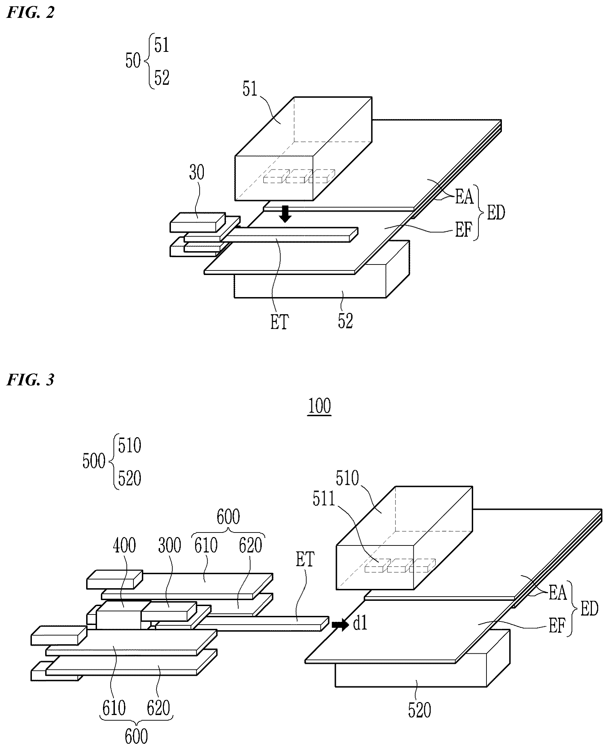

A conventional method for bonding an electrode tab will be described below with reference to FIGS. 1 and 2.

FIGS. 1 and 2 are schematic diagrams for explaining a conventional method for bonding an electrode tab to an electrode.

Referring to FIGS. 1 and 2, the electrode ED may include an electrode current collector EF and an electrode active material portion EA formed by applying an electrode active material slurry onto the electrode current collector EF. As mentioned above, the electrode tab ET is bonded to a portion where the electrode active material slurry is not applied and thus the electrode current collector EF is exposed.

As an example, while the tab clamp jig 30 fixes the electrode tab ET, the electrode tab ET is positioned on one surface of the portion where the electrode collector EF is exposed. Then, the electrode tab ET and the electrode current collector EF are bonded by the bonding member 50, wherein the electrode tab ET and the electrode current collector EF include metal materials and thus, weld-bonding can be applied. The binding member 50 can include a horn 51 and an anvil 52. While the horn 51 and the anvil 52 strongly press the electrode tab ET and the electrode current collector EF, ultrasonic welding can be performed.

However, in the conventional case, a separate destructive inspection was performed to confirm whether the bonding between the electrode tab ET and the electrode current collector EF was favorably performed. That is, by stopping the bonding process, taking out a sample separately, and then performing destructive inspection, it is possible to determine whether the bonding was favorably performed.

However, this type of inspection has the problem that the procedure is delayed in the process of taking out the sample separately, and destructive inspection may not be highly accurate depending on an inspector. Therefore, there is a need to develop a technology that can automatically perform the inspection on the bonding along with the bonding process, and at the same time has high inspection accuracy.

### [DETAILED DESCRIPTION OF THE INVENTION]

### [Technical Problem]

It is an object of the present disclosure to provide an electrode tab bonding equipment that can automatically inspect the bonding degree of an electrode tab when bonding an electrode tab to an electrode, and an electrode tab bonding method using the same.

The technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided an electrode tab bonding equipment comprising: a transfer member that transfers an electrode including an electrode current collector; a tab clamp jig that moves an electrode tab on one surface of the electrode current collector or pulls the electrode tab; a tensile force measuring device provided in the tab clamp jig; a bonding member that bonds the electrode tab on the electrode current collector; and at least one electrode clamp jig that fixes the electrode.

The electrode tab may be moved while being fixed to the tab clamp jig.

The tab clamp jig may move the electrode tab along one direction onto one surface of the electrode current collector, and after the electrode tab is bonded to one surface of the electrode current collector, the jig may pull the electrode tab in the other direction.

When the tab clamp jig pulls the electrode tab in another direction, the tensile force measuring device may measure, in real time, the tensile force with which the tab clamp jig pulls the electrode tab.

When the tab clamp jig pulls the electrode tab in another direction, at least one electrode clamp jig may fix the electrode.

The bonding member may include a horn and an anvil, and the electrode tab may be weld-bonded to the electrode by the horn and the anvil.

According to another embodiment of the present disclosure, there is provided an electrode tab bonding method in which: an electrode including an electrode current collector is transferred, a tab clamp jig moves an electrode tab on one surface of the electrode current collector, the electrode tab is bonded onto the electrode current collector, at least one electrode clamp jig fixes the electrode, the tab clamp jig pulls the electrode tab bonded to one surface of the electrode current collector, and a tensile force measuring device provided in the tab clamp jig measures, in real time, the tensile force with which the tab clamp jig pulls the electrode tab.

When the tab clamp jig pulls the electrode tab, the tensile force measuring device may measure, in real time, the tensile force with which the tab clamp jig pulls the electrode tab.

When the tab clamp jig pulls the electrode tab, at least one electrode clamp jig may fix the electrode.

The electrode tab may be weld-bonded onto the electrode.

### [Advantageous Effects]

According to embodiments of the present disclosure, the electrode tab bonding equipment is provided with an equipment that can measure the tensile force during the process of pulling the electrode tab again after bonding the electrode tab onto the electrode current collector, thereby making it possible to automatically inspect the bonding degree of the electrode tab when bonding the electrode tab to the electrode. In addition, since the tensile force is measured while pulling the electrode tab in a specified direction, it is possible to improve the accuracy and consistency of the inspection.

The effects of the present disclosure are not limited to those described above, and other effects that are not described herein may clearly be understood by one of ordinary skill in the art from the claims set forth herein.

### [BRIEF DESCRIPTION OF THE DRAWING]

FIGS. 1 and 2 are schematic diagrams for explaining a conventional method for bonding an electrode tab to an electrode.
FIGS. 3 to 6 are schematic diagrams of an electrode tab bonding equipment and an electrode tab bonding method using the same according to an embodiment of the present disclosure.
FIG. 7 is a schematic diagram of a transfer member according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

FIGS. 3 to 6 are schematic diagrams of an electrode tab bonding equipment and an electrode tab bonding method using the same according to an embodiment of the present disclosure.

Referring to FIGS. 3 to 6, an electrode tab bonding equipment 100 according to an embodiment of the present disclosure comprises a transfer member that transfers an electrode ED including an electrode current collector EF; a tab clamp jig 300 that moves an electrode tab on one surface of the electrode current collector EF or pulls the electrode tab ET; a tensile force measuring device 400 provided in the tab clamp jig 300; a bonding member 500 that bonds the electrode tab ET on the electrode current collector EF; and at least one electrode clamp jig 600 that fixes the electrode ED.

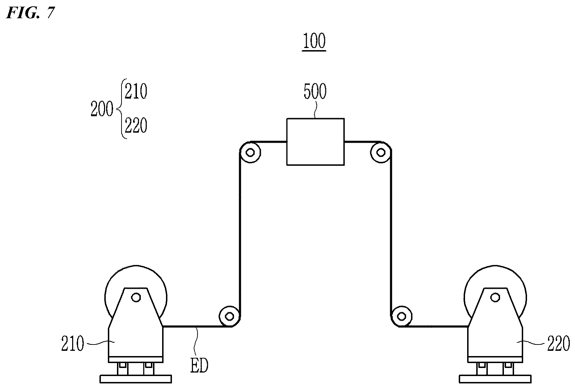

The electrode ED may include an electrode current collector EF containing a metal material, and an electrode active material portion EA formed by applying an electrode active material slurry to one surface or both surfaces of the electrode current collector EF. Partial areas of the electrode current collector EF may be exposed without applying the electrode active material slurry. The transfer member may be a member that continuously transfers the electrode ED in one direction. This transfer member will be described again with reference to FIG. 7.

The tab clamp jig 300 according to the present embodiment is a member for transferring the electrode tab ET, and can also inspect the bonding degree of the electrode tab ET while pulling the electrode tab ET after the electrode tab ET is bonded to the electrode current collector EF. That is, the electrode tab ET can be moved while being fixed to the tab clamp jig 300. As an example, the tab clamp jig 300 may be in the form of holding a part of the electrode tab ET.

The bonding member 500 according to the present embodiment is a member for bonding an electrode tab ET containing a metal material and an electrode current collector EF. As an example, in order to weld-bond the electrode tab ET and the electrode current collector EF, the bonding member 500 may include a horn 510 and an anvil 520. After the electrode tab ET is moved by the tab clamp jig 300 to an area of the electrode collector EF of the electrode ED where the electrode active material portion EA is not formed, the horn 510 and the anvil 520 strongly press the electrode tab ET and the electrode current collector EF. After that, while ultrasonic vibration or high heat is applied from a horn tip 511 formed on the surface of the horn 510, the electrode tab ET and the electrode current collector EF can be bonded to each other. However, the configuration of the horn 510 and the anvil 520 for weld-bonding is an exemplary structure of the bonding member 500, and other bonding methods other than weld-bonding may be applied. In another embodiment of the present disclosure, a bonding method using a conductive adhesive or a tape for wrapping around the outer surface may be applied, and the bonding member may be configured to bond the electrode tab ET and the electrode current collector EF with a conductive adhesive or a tape.

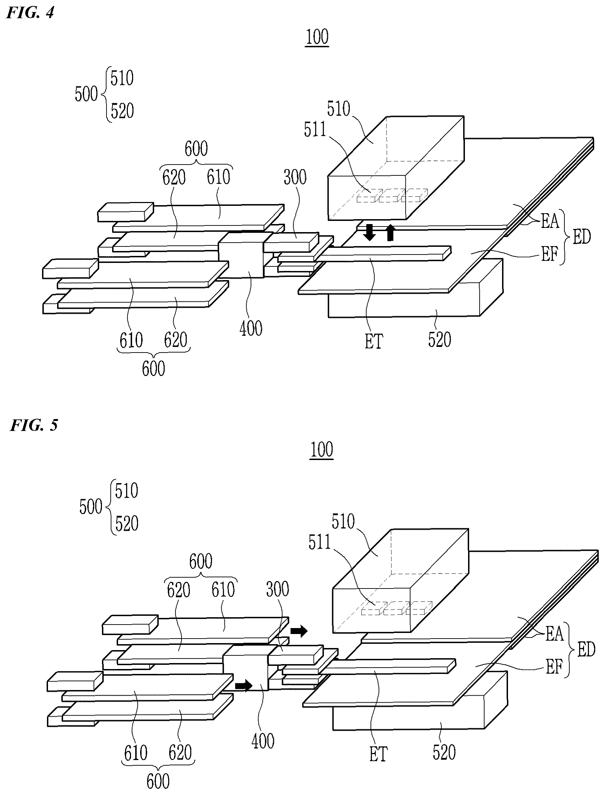

That is, the tab clamp jig 300 moves the electrode tab ET along one direction d1 onto one surface of the electrode current collector EF, as illustrated in FIG. 3. After the electrode tab ET is bonded to one surface of the electrode current collector EF by the bonding member 500 as illustrated in FIG. 4, the tab clamp jig 300 can pull the electrode tab ET in another direction d2, as illustrated in FIG. 5.

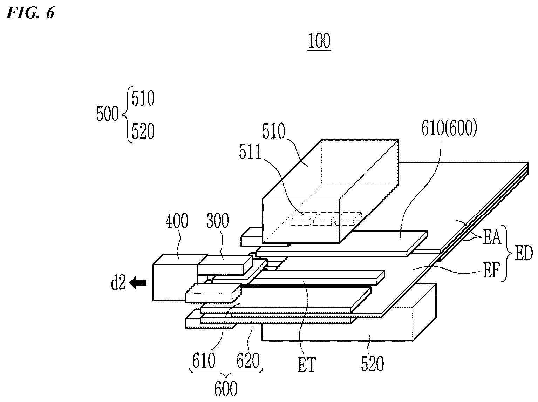

At this time, at least one electrode clamp jig 600 according to the present embodiment can fix the electrode ED. As an example, the electrode clamp jig 600 can include a first member 610 and a second member 620. As illustrated in FIGS. 5 and 6, when the electrode ED is positioned between the first member 610 and the second member 620, at least one of the first member 610 and the second member 620 can move toward the electrode ED and grasp the electrode ED strongly. That is, after the electrode tab ET is bonded to one surface of the electrode current collector EF, the electrode ED can be fixed by the electrode clamp jig 600. When the tab clamp jig 300 pulls the electrode tab ET, the electrode clamp jig 600 can fix the electrode ED by applying pressure to the electrode ED in the up-and-down direction.

As mentioned above, the tab clamp jig 300 may be provided with a tensile force measuring device 400. If the clamp jig 300 can measure the tensile force when pulling the electrode tab ET, the shape, number, and position of the tensile force measuring device 400 are not particularly limited.

When the clamp jig 300 pulls the electrode tab ET bonded to the electrode current collector EF in another direction d2, the tensile force measuring device 400 can measure, in real time, the tensile force with which the tab clamp jig 300 pulls the electrode tab ET. In addition, when the clamp jig 300 pulls the electrode tab ET bonded to the electrode current collector EF in another direction d2, at least one of the electrode clamp jigs 600 fixes the electrode ED.

After the electrode tab ET is bonded to the electrode collector EF through the above process, the bonding degree can be immediately inspected. For example, when the tensile force value measured by the tensile force measuring device 400 is equal to or greater than the reference value, it can be determined that the bonding is normally performed. The reference value is not a value that is uniformly applied, and can be individually set in accordance with the situation, taking into consideration the material, thickness, etc. of each of the electrode tab ET and the electrode current collector EF.

Taken together, the electrode tab bonding equipment 100 according to the present embodiment can immediately inspect the bonding degree after bonding the electrode tab ET using the tensile force measuring device 400 provided in the tab clamp jig 300 and at least one electrode clamp jig 600 that fixes the electrode ED. That is, compared to the conventional method of interrupting the bonding process to take out samples and performing destructive inspection, the present embodiment can greatly simplify the bonding inspection procedure through automated equipment. In addition, since the tensile force is measured while pulling the electrode tab ET in a specified direction using the tab clamp jig 300, the accuracy and consistency of the inspection can be increased.

FIG. 7 is a schematic diagram of a transfer member according to an embodiment of the present disclosure.

Referring to FIGS. 3 and 7, the electrode tab bonding equipment 100 according to the present embodiment includes a transfer member 200 that transfers an electrode ED as mentioned above. The transfer member 200 is a member for moving the electrode ED in one direction. As an example, the transfer member 200 may include an unwinder 210 and a rewinder 220. The unwinder 210 may supply the electrode ED in one direction while unwinding it, and the supplied electrode ED may be recovered while being wound by the rewinder 220. The electrode ED may be continuously transferred between the unwinder 210 and the rewinder 220, and the electrode ED being transferred may be bonded to the electrode tab ET when passing through the bonding member 500.

Next, an electrode tab bonding method according to an embodiment of the present disclosure will be described with reference to FIGS. 3 to 6. However, description of parts that overlap with the above-mentioned contents will be omitted.

Referring to FIG. 3, in an electrode tab bonding method according to an embodiment of the present disclosure, an electrode ED including an electrode current collector EF is transferred, and a tab clamp jig 300 can move an electrode tab ET onto one surface of the electrode current collector EF. As mentioned above, the electrode tab ET can be moved while being fixed to the tab clamp jig 300. As an example, the tab clamp jig 300 can be in the form of holding a part of the electrode tab ET.

Referring to FIG. 4, the electrode tab ET may be bonded onto the electrode current collector EF. As an example, the electrode tab ET may be weld-bonded onto the electrode current collector EF. As an example, ultrasonic vibrations or high heat can be applied while the horn 510 and anvil 520 of the bonding member 500 strongly press the electrode tab ET and the electrode collector EF. However, as mentioned above, the weld-bonding is an example, and other bonding methods may be applied. As another example, the electrode tab ET may be bonded onto the electrode current collector EF using a conductive adhesive or a tab for wrapping around the outer surface.

Referring to FIGS. 5 and 6, the tab clamp jig 300 pulls the electrode tab ET bonded to one surface of the electrode current collector EF, and the tensile force measuring device provided in the tab clamp jig 300 measures, in real time, the tensile force with which the tab clamp jig 300 pulls the electrode tab ET. At this time, at least one electrode clamp jig 600 fixes the electrode ED. In other words, when the tab clamp jig 300 pulls the electrode tab ET, the tensile force measuring device 400 measures the pulling tensile force in real time, and at least one electrode clamp jig 600 fixes the electrode ED while strongly grasping the electrode ED.

As mentioned, in the electrode tab bonding method according to the present embodiment, after bonding the electrode tab ET, the bonding degree can be inspected immediately. Through this automated instrument, the bonding process and inspection process can be performed immediately in a series of steps. In addition, since the tensile force is measured while pulling the electrode tab ET in a specified direction using the tab clamp jig 300, it is possible to improve the accuracy and consistency of the inspection.

In the embodiments above, expressions indicating directions such as "front," "rear," "left," "right," "up," and "down" have been used. However, these expressions are used only to facilitate the description, and may vary, for example, depending on the location of a target object or an observer.

While preferred embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: electrode tab bonding equipment
200: transfer member
300: tab clamp jig
400: tensile force measuring device
500: bonding member
600: electrode clamp jig

## Claims

1. An electrode tab bonding equipment comprising:
a transfer member that transfers an electrode including an electrode current collector;
a tab clamp jig that moves an electrode tab on one surface of the electrode current collector or pulls the electrode tab;
a tensile force measuring device provided in the tab clamp jig;
a bonding member that bonds the electrode tab on the electrode current collector; and
at least one electrode clamp jig that fixes the electrode.

2. The electrode tab bonding equipment according to claim 1, wherein:
the electrode tab is moved while being fixed to the tab clamp jig.

3. The electrode tab bonding equipment according to claim 1, wherein:
the tab clamp jig moves the electrode tab along one direction onto one surface of the electrode current collector, and after the electrode tab is bonded to one surface of the electrode current collector, the tab clamp jig pulls the electrode tab in another direction.

4. The electrode tab bonding equipment according to claim 3, wherein:
when the tab clamp jig pulls the electrode tab in another direction, the tensile force measuring device measures, in real time, the tensile force with which the tab clamp jig pulls the electrode tab.

5. The electrode tab bonding equipment according to claim 3, wherein:
when the tab clamp jig pulls the electrode tab in another direction,
at least one electrode clamp jig fixes the electrode.

6. The electrode tab bonding equipment according to claim 1, wherein:
the bonding member includes a horn and an anvil, and
the electrode tab is weld-bonded to the electrode by the horn and the anvil.

7. An electrode tab bonding method in which:
an electrode including an electrode current collector is transferred,
a tab clamp jig moves an electrode tab on one surface of the electrode current collector,
the electrode tab is bonded onto the electrode current collector,
at least one electrode clamp jig fixes the electrode,
the tab clamp jig pulls the electrode tab bonded to one surface of the electrode current collector, and
a tensile force measuring device provided in the tab clamp jig measures, in real time, the tensile force with which the tab clamp jig pulls the electrode tab.

8. The electrode tab bonding method according to claim 7, wherein:
when the tab clamp jig pulls the electrode tab, the tensile force measuring device measures, in real time, the tensile force with which the tab clamp jig pulls the electrode tab.

9. The electrode tab bonding method according to claim 7, wherein:
when the tab clamp jig pulls the electrode tab, at least one electrode clamp jig fixes the electrode.

10. The electrode tab bonding method according to claim 7, wherein:
the electrode tab is weld-bonded onto the electrode current collector.
